(19) Europäisches Patentamt
European Patent Office
Office européen des brevets

(11) **EP 4 618 073 A2**

(12) **EUROPEAN PATENT APPLICATION**

(43) Date of publication:
**17.09.2025 Bulletin 2025/38**

(21) Application number: **25159376.0**

(22) Date of filing: **21.02.2025**

(51) International Patent Classification (IPC):
**G10L 15/06** (2013.01)  **G10L 15/16** (2006.01)
**G06N 3/084** (2023.01)  **G06N 3/045** (2023.01)

(52) Cooperative Patent Classification (CPC):
**G10L 15/063; G06N 3/084; G10L 15/16;**
**G06N 3/045**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **15.03.2024 US 202463566055 P**
**12.06.2024 US 202418741506**

(71) Applicant: **Microsoft Technology Licensing, LLC**
**Redmond, WA 98052 (US)**

(72) Inventors:
• **LI, Jinyu**
  **Redmond, 98052 (US)**
• **WANG, Zhenghao**
  **Redmond, 98052 (US)**
• **ZHAO, Rui**
  **Redmond, 98052 (US)**

(74) Representative: **CMS Cameron McKenna Nabarro**
**Olswang LLP**
**Cannon Place**
**78 Cannon Street**
**London EC4N 6AF (GB)**

(54) **SPACE EFFICIENT TRAINING FOR SEQUENCE TRANSDUCTION MACHINE LEARNING**

(57)    Efficient training is provided for models comprising RNN-T (recurrent neural network transducers). The model transducers comprise an encoder, a decoder, and a fused joint network. The fused joint network receives encoding and decoding embeddings from the encoder and decoder. During training, the model stores the probability data for the next blank output and the next token at each time step rather than storing all probabilities for all possible outputs. This can significantly reduce requirements for memory storage, while still preserving the relevant information required to calculate the loss that will be backpropagated through the neural transducer during training to update the parameters of the neural transducer and to generate a trained or modified neural transducer. The computation of embeddings can also be divided into small slices and some of the utterance padding used for the training samples can also be removed to further reduce the memory storage requirements.

<u>700</u>

| |
|---|
| OBTAINING A NEURAL TRANSDUCER COMPRISING AN ENCODER, A DECODER, AND A FUSED JOINT NETWORK, WHEREIN THE FUSED JOINT NETWORK HAS BEEN MODIFIED TO COMPRISE A FUSED LINEAR AND SOFTMAX LAYER — 710 |
| PROVIDING AN ENCODER TRAINING BATCH TO THE ENCODER AND A DECODER TRAINING BATCH TO THE DECODER — 720 |
| OBTAINING ENCODING EMBEDDINGS AND DECODING EMBEDDINGS FROM THE ENCODER AND DECODER — 730 |
| PROVIDING THE ENCODING EMBEDDINGS AND DECODING EMBEDDINGS TO THE FUSED JOINT NETWORK — 740 |
| CONFIGURING THE FUSED JOINT NETWORK TO OUTPUT A NEXT BLANK OUTPUT AND A NEXT TOKEN OUTPUT — 750 |
| COMPUTING A LOSS FOR THE NEURAL TRANSDUCER — 760 |
| BACKPROPAGATING THE LOSS THROUGH THE NEURAL TRANSDUCER TO UPDATE THE PARAMETERS OF THE NEURAL TRANSDUCER TO MINIMIZE THE LOSS — 770 |
| GENERATING A MODIFIED NEURAL TRANSDUCER — 780 |

*Fig. 7*

**EP 4 618 073 A2**

## Description

### CROSS-REFERENCE TO RELATED APPLICATION

This application claims the benefit and priority of United States Provisional Patent Application Serial No. 63/566,055, filed on 15 March 2024, entitled "SPACE EFFICIENT TRAINING FOR SEQUENCE TRANSDUCTION MACHINE LEARNING," and United States Non-Provisional Patent Application No. 18/741,506, filed on 12 June 2024, entitled "SPACE EFFICIENT TRAINING FOR SEQUENCE TRANSDUCTION MACHINE LEARNING", and which applications are expressly incorporated herein by reference in their entirety.

### BACKGROUND

Automatic speech recognition (ASR) systems are designed to convert spoken utterances (e.g., words, phrases, and/or sentences) into written text, and are used in a variety of applications, such as transcription services, voice assistants, and telecommunication systems. The ASR systems process and decode audio data to detect the corresponding speech utterances. The processed audio data is then used in various downstream tasks such as search-based queries, speech-to-text transcription, language translation, etc. Currently, end-to-end (E2E) models are a popular ASR system. Some of these E2E systems include connectionist temporal classification (CTC) systems, attention-based encoder-decoder systems, and neural transducers. Each of these systems transforms acoustic features into text sequences.

Neural transducers are a type of machine learning model that is used in performing many (ASR) tasks. Neural transducers, specifically Recurrent Neural Network Transducers (RNN-Ts), are a popular choice for ASR systems due to their ability to handle sequence-to-sequence tasks, where the input and output sequences can have different lengths. This is particularly useful in speech recognition, where the length of the spoken utterance (input sequence) often does not match the length of the transcribed text (output sequence).

A typical neural transducer comprises an encoder, a decoder, and a joint network. The encoder processes the input sequence (e.g., acoustic features of speech) and generates a sequence of encoder embeddings. The decoder takes a sequence of previously predicted outputs and generates a sequence of decoder embeddings. The joint network then combines the encoder and decoder embeddings to generate a sequence of joint embeddings. These joint embeddings are then transformed and passed through a softmax function to generate a probability distribution over the output vocabulary for each time step (t) and each label step (u) in a lattice of different transducer processing nodes.

The training of neural transducers involves computing a loss function based on the difference between the final predicted output generated by the neural transducer when it is applied to training data and the actual output corresponding to the training data and then updating the model parameters to minimize this loss. This process, known as backpropagation, requires storing the joint embeddings and their gradients as tensors in memory, which can be computationally expensive and memory-intensive, especially when the output vocabulary size (denoted as K) is large.

In the context of ASR, the output vocabulary typically includes all possible words, subwords, or phonemes in the target language, as well as a special 'blank' symbol used to handle the alignment between the input and output sequences. The size of the output vocabulary can range from a few thousand for languages like English, to over ten thousand for languages like Chinese. This large vocabulary size can lead to a high memory demand during the training of neural transducers, which can limit the training batch size and slow down the training speed. In fact, it is common for the memory capacity of a system performing training on the neural transducer to be the bottleneck in the training process, rather than the computational capacity of the system.

Accordingly, there is an ongoing need and desire for methods and systems that can be utilized to reduce the memory requirements of systems performing training on neural transducers, such as RNN-T models.

### SUMMARY

Disclosed embodiments include systems and methods for space-efficient training of machine learning models, such as neural transducers, and even more particularly for space-efficient training of models configured as RNN-Ts.

In some aspects, the techniques described herein relate to a method for training a neural transducer, the method including: obtaining a neural transducer including an encoder, a decoder, and a fused joint network, wherein the fused joint network has been modified to include a fused linear and softmax layer; providing an encoder training batch to the encoder and a decoder training batch to the decoder; obtaining encoding embeddings and decoding embeddings from the encoder and decoder, respectively; providing the encoding embeddings and decoding embeddings to the fused joint network; configuring the fused joint network to output a next blank output and a next token output; computing a loss for the neural transducer; backpropagating the loss through the neural transducer to update the parameters of the neural transducer to minimize the loss; and generating a modified neural transducer.

In some aspects, the techniques described herein relate to a method for training a neural transducer, the method including: during training, dividing a computation of joint embeddings into slices; computing a loss for the neural transducer based on the training with the joint embeddings; recalculating the joint embeddings by dividing the computation of joint embeddings into slices during backpropagation backpropagating the loss through the slices of the neural transducer to update the parameters of the neural transducer to minimize the loss; and generating a modified neural transducer.

In some aspects, the techniques described herein relate to a method for training a neural transducer, the method including: during training, storing slices of transformed embeddings; and dynamically modifying at least one of a training data batch size and/or (b) a quantity or size of slices of transformed embeddings to be stored, the dynamic modification being based on a memory storage maximum capacity and/or a predetermined threshold of memory storage of a computing system performing the method; computing a loss for the neural transducer based on the transformed embeddings; backpropagating the loss through the neural transducer to update the parameters of the neural transducer to minimize the loss; and generating a modified neural transducer.

In some aspects, the techniques described herein relate to a method for training a neural transducer, the method including: obtaining a training batch of utterances; removing padding used for one or more utterances of the training batch; generating joint embeddings and corresponding transformed embeddings of the utterances; computing a loss for the neural transducer based on the transformed embeddings; backpropagating the loss through the neural transducer to update the parameters of the neural transducer to minimize the loss; and generating a modified neural transducer.

Some aspects of the invention also include systems and storage devices having stored computer-executable instructions that are executable by hardware processors of the systems for implementing the disclosed methods.

This Summary is provided to introduce a selection of concepts that are further described below in the Detailed Description. This Summary is not intended to identify key features or essential features of the claimed subject matter, nor is it intended to be used as an aid in determining the scope of the claimed subject matter.

## BRIEF DESCRIPTION OF THE DRAWINGS

In order to describe the manner in which the above-recited and other advantages and features can be obtained, a more particular description of the subject matter briefly described above will be rendered by reference to specific embodiments that are illustrated in the appended drawings. Understanding that these drawings depict only typical embodiments and are not, therefore, to be limiting in scope, embodiments will be described and explained with additional specificity and detail through the use of the accompanying drawings in which:

Fig. 1A illustrates an example embodiment of a conventional neural transducer.

Fig. 1B illustrates an example embodiment of a conventional RNN-T or neural transducer.

Fig. 2A illustrates an example embodiment of a forward training pass of a conventional RNN-T network including required memory storage at different stages of the training process.

Fig. 2B illustrates a table of various possible K values which are dependent on the language in which the training batches are represented.

Figs. 3A and 3B illustrate examples of an output probability lattice for applying a neural transducer to training data sets to compute loss associated with variance from the training data sets and ground truth as calculated by the neural transducer.

Fig. 4A illustrates an example of a conventional forward pass training process for an RNN-T.

Fig. 4B illustrates an example of a new or modified forward pass training process for an RNN-T, as compared to the conventional forward pass training process shown in Fig. 4A.

Fig. 4C illustrates another example of a new or modified forward pass training process for an RNN-T, as compared to the conventional forward pass training process shown in Fig. 4A.

Fig. 5 illustrates an example of a detailed view of the joint network used in the modified training process shown in Fig. 4B.

Fig. 6 represents an example embodiment of a backward pass or backpropagation of the modified training process after a loss is calculated.

Fig. 7 illustrates an example of a process flow diagram for performing space-efficient training of a neural transducer.

Fig. 8A is another representation of the system shown in Fig. 2A for a conventional RNN-T.

Fig. 8B illustrates a modified version of the RNN-T shown in Fig. 8A which is used for reducing the memory storage requirements for computing and storing the joint embeddings during training.

Fig. 9 illustrates an example of a process flow diagram for performing space-efficient training of a neural transducer.

Fig. 10A and 10B illustrate comparisons of memory configurations and memory storage requirements for conventional RNN-T models and modified RNN-T models during training.

Fig. 11 illustrates an example of a process flow diagram for performing space-efficient training of a neural transducer.

Fig. 12 illustrates an example of training samples in which padding is removed from the training samples.

Fig. 13 illustrates an example of a process flow diagram for performing space-efficient training of a neural transducer.

Fig. 14 illustrates an example computing environment in which a computing system incorporates and/or is utilized to perform disclosed aspects of the disclosed embodiments.

**DETAILED DESCRIPTION**

Disclosed embodiments include systems and methods that may be utilized for space-efficient training of a machine learning model, such as a neural transducer (e.g., an RNN-T transducer), to improve the efficiency of the training and for reducing the burden on the systems performing the training.

The disclosed embodiments may be utilized to realize many technical benefits and advantages over conventional systems and methods for performing training of neural networks, such as by reducing the storage requirements during the training. This is accomplished, in some instances, by reducing the amount of probability data stored for the joint embeddings and transformed embeddings of the neural network during the processing of the training data, and while continuing to store the relevant data required to calculate the training loss, even though some of the data required for backpropagation is not stored and must be recalculated during backpropagation.

Additional technical benefits can include further reducing the storage requirements during training by slicing the joint and transformed embeddings during processing into more manageable processing chunks and reducing padding for some of the utterance samples. Even more technical benefits can be achieved by dynamically adjusting the storage scheme to dynamically store some of the probability data that is required for backpropagation, but which is not required to calculate the loss during training, until storage thresholds are reached. This can help reduce the amount of recalculation that is required during backpropagation.

Conventional Neural Transducers

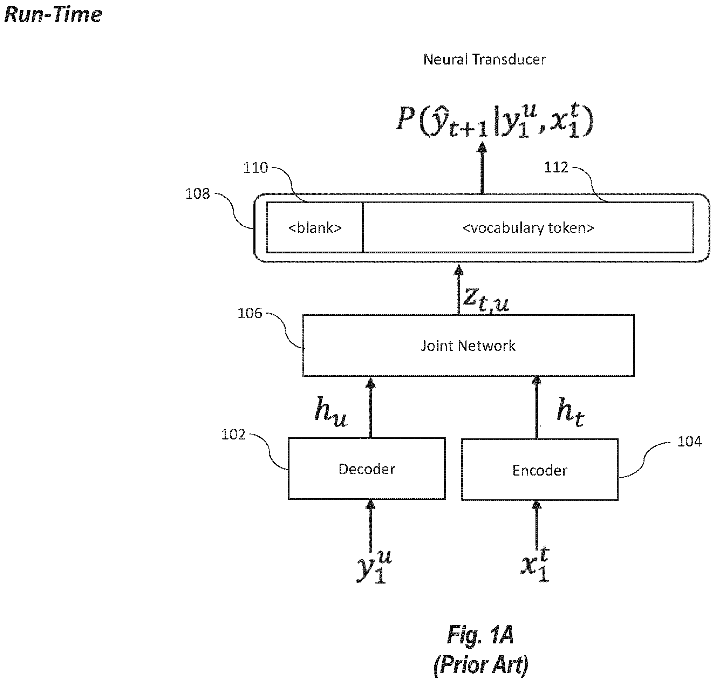

Attention will first be directed to Fig. 1A, which illustrates an example embodiment of a conventional neural transducer configured to perform speech recognition on speech input during run-time. As illustrated, the conventional neural transducer comprises a decoder 102 (also referred to as a predictor), an encoder 104, and a joint network 106. The predictor takes input (e.g., " $y_1^u$ ") comprising a previously predicted non-blank output (e.g., historical label sequence) to generate a prediction output (e.g., "$h_u$"), which is a label representation for the decoder embedding. The encoder takes input (e.g., " $x_1^t$ ") comprising acoustic features associated with a portion of speech data to generate an encoder output (e.g., "$h_t$"), which is an acoustic representation of the encoder embedding.

The joint network 106 generates a joint output (e.g., "$z_{t,u}$") based on the decoder output and the encoder output. The joint output is then used to generate a final prediction 108 for a corresponding portion of speech data, which includes a blank token 110 and vocabulary token 112, which results in a probability distribution over the output layer. Notably, the predictor or decoder 102 is configured in the conventional model to predict both the blank token 110 as well as the vocabulary token 112, such that the training and results of the two types of potential tokens are tied together.

In order to address the length differences between the acoustic feature and label sequences, a special blank symbol is added to the output vocabulary to represent a null token. Each alignment contains a particular number of output tokens. The objective function of the transducer model is to minimize the negative log probability over all possible alignments.

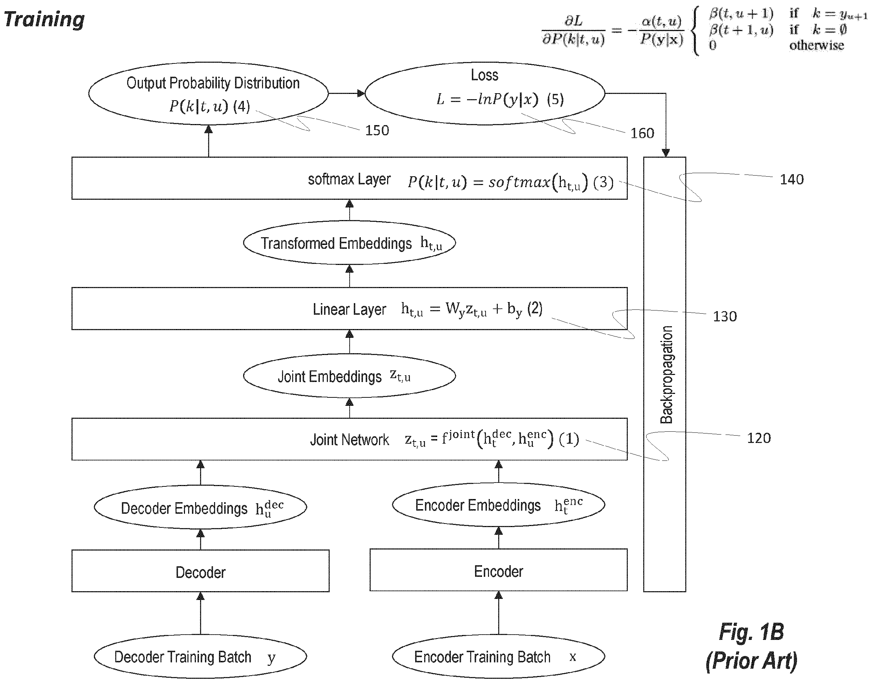

In recent years, E2E-based automatic speech recognition systems like the neural transducer illustrated in Fig. 1 have achieved success due to their simplicity and promising performance and are able to outperform traditional hybrid models in some scenarios. However, the joint optimization of the acoustic model and lexicon and language model in the neural transducer also brings significant challenges in adapting the ASR system. For example, neural transducers such as those illustrated in Fig. 1A must use adaptation training data that comprises audio-text pairs.

Conventional models, such as those referenced in Fig. 1A, are not easily tuned/trained for new domains using only adaptation text. This makes adaptation tasks more costly, both in money spent curating the appropriate dataset and in computational processing, which must use the audio data along with the corresponding textual data to adapt an ASR system for new domains. In particular, conventional models must use the audio-text pairs because the blank token and vocabulary token are predicted jointly using the same predictor, as previously noted, and because there are no individual acoustic and language models in conventional transducer modeling.

Notably, there are no individual acoustic and language models used for performing ASR tasks in the conventional neural transducer space. Additionally, although the predictor of the transducer looks similar to a language model in terms of model structure (i.e., an internal language model could be extracted from the predictor and joint network), it does not perform as a language model because the predictor needs to coordinate with the acoustic encoder closely. Hence, it is not straightforward to utilize text-only data to adapt the model from a source domain to a target domain. This especially limits the ability to perform fast adaptation, for example, because the entire model must be adapted.

Additionally, when a conventional model attempts to adapt its neural transducer to a new domain, it experiences significant degradation in its ability to perform speech recognition in the original domain due to the architecture and weighting applied by the neural transducer to the new domain.

The foregoing drawbacks have hindered the use of neural transducers in many different ASR applications. While there have been some efforts made to mitigate or solve these shortcomings, such approaches have been computationally expensive and are not practical for applications requiring fast adaptation.

Conventional Neural Transducers: Training

Attention will now be directed to Figure 1B which illustrates another example of a conventional RNN-T neural transducer network, but during a training process, instead of during run-time as illustrated in Fig. 1A. This conventional neural transducer comprises a decoder that operates as a language model or predictor. The neural transducer also includes an encoder which operates as an acoustic model.

The decoder takes in a decoder training batch referenced with label Y as input and outputs decoder embeddings which are labeled as $h_u^{dec}$. The decoder training batch comprises different utterances represented by their respective label tokens. The decoder training batch is configured as a text-based or transcription-based training data set. The encoder takes in the encoder training batch X and outputs encoder embeddings represented by the variable $h_t^{enc}$. The encoder training batch comprises utterances of different frame lengths and is configured as audio data comprising synthetic or natural speech.

The joint network of the RNN-T model receives the decoder embeddings and the encoder embeddings and combines them to generate joint embeddings represented by variable $z_{t,u}$. The joint network generates the joint embeddings by applying a joining function on both the decoder embeddings and the encoder embeddings as represented by equation 1 (120). After generating the joint embeddings, the systems apply a linear layer or a linear transformation on the joint embeddings. The linear transformation is represented by the equation 2 (130).

This linear layer then generates a transformed embedding output represented by $h_{t,u}$. In order to obtain the final output probability distribution represented by equation 4 (150), a softmax layer is applied to the transformed embeddings as represented by equation 3 (140).

After generating the output probability distribution which represents all possible alignments between the input and outputs of the decoder training batch and the encoder training batch utterances. In other words, the output probability distribution represents all of the alignments between the audio data and the transcription data. The output probability distribution is also referred to as an output lattice where each node represents a possible label token at a certain time (e.g., every 10ms of an utterance).

In order to perform training of the neural network, a loss function is calculated as represented by equation 5 (160) to determine the variance from the output from the ground truth of the training data. This loss is then backpropagated through the model in order to update and modify the various layers of the model to minimize the loss and increase the accuracy and quality of subsequent output probability distributions. Notably, the derivative of the loss function only depends on two different outputs - the next blank token and the next non-blank token. All other outputs yield a zero in the loss calculation and are not needed or used in the current model calculation of the loss function.

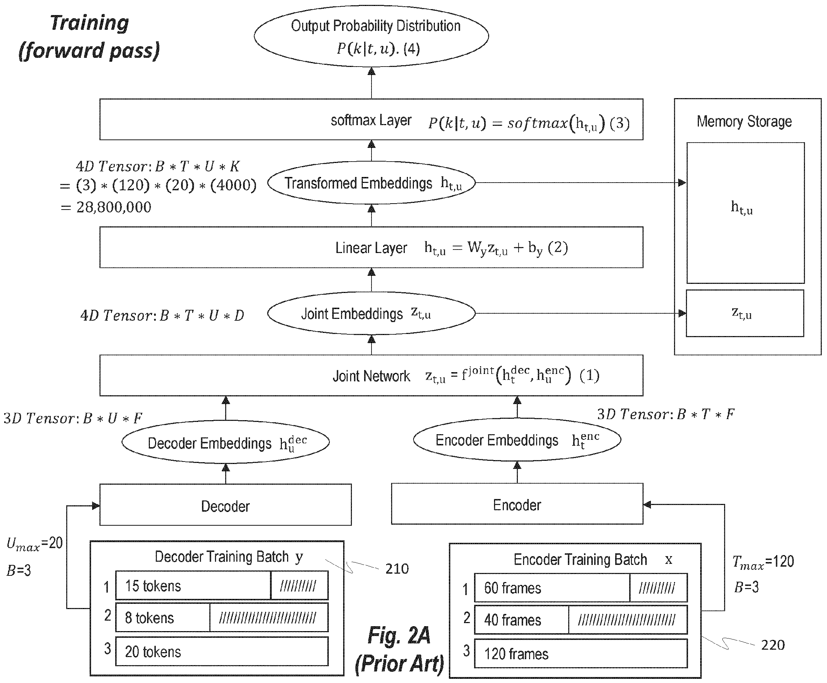

Attention will now be directed to Figure 2A which represents an example embodiment of a forward training pass of a conventional RNN-T network including required memory storage at different stages of the training process. As shown in this example, the decoder training batch Y 210 comprises a set of three utterances. The first utterance comprises 15 tokens, the 2nd utterance comprises 8 tokens, and the third utterance comprises 20 tokens. As also shown, padding is applied to the first and second utterances so that they comprise the same token length as utterance 3 (i.e., a length of 20 tokens).

Encoder training batch X 220 comprises corresponding utterances to the utterances in decoder training batch y 210, but this corresponding training batch x 220 is represented as acoustic audio data. The first utterance comprises 60 frames, the 2nd utterance comprises 40 frames and the third utterance comprises 120 frames. Similar to the decoder training batch, the first and second utterances are padded to comprise the same length as the third utterance which has 120 frames.

We note here that the batch number is three utterances (represented in this figure as value B), the maximum token length of the utterances in the batch is 20 (represented by the value U) and the maximum duration or time of the utterances is 120 frames (represented in this figure as value T).

After receiving the decoder training batch Y 210 as input, the decoder generates decoder embeddings as represented by $h_u^{dec}$. The decoder embeddings for the batch comprise a 3D tensor which equals B (utterances) * U (utterance length) * F (size of the vector for the decoder embeddings). Similarly, after the encoder training batch is provided to the encoder as input, the encoder generates encoder embeddings represented by variable $h_t^{enc}$ which is associated with the 3D tensor equaling B * T * F. The decoder embeddings and the encoder embeddings are provided as input to the joint network which combines the decoder embeddings and the encoder embeddings to generate joint embeddings represented by Z. Joint embeddings represented by Z correspond to a 4D tensor which equals B * T * U * D (where D is the dimension size of $z_{t,u}$. As shown in the figure, the 4D tensor will need to be stored in memory storage in order to perform the subsequent layer processing.

After generating the joint embeddings, a linear layer or linear transformation is applied to the joint embeddings to generate the transformed embeddings represented by variable H. The transform embeddings correspond to a new 4D tensor or a second 4D tensor which equals B * T * U * K (where K is the size of the output vocabulary size, as described in the background). This second 4Dtensor will also need to be stored in the memory storage as shown in Figure 2A. This second 4Dtensor equals 3 * 120 * 20 * 4000 (assuming k is 4000 for a standard English output vocabulary size), which equals 28,800,000 tensor values. For a larger k, the storage requirements would be even more onerous. For example, in practice of all of the different possible values for B, T, U, and K, the resulting 4D could be much larger than the example numbers and representations provided herein.

After generating the transformed embeddings, a softmax layer is applied to obtain the final output probability distribution. Notably, in order to generate the output probability distribution, and also predict the most probable alignment, the system must consider all possible alignments as represented by all possible outputs in the probability lattice.

As shown in Figure 2A, the transformed embeddings require a much larger portion of the memory storage than the joint embeddings.

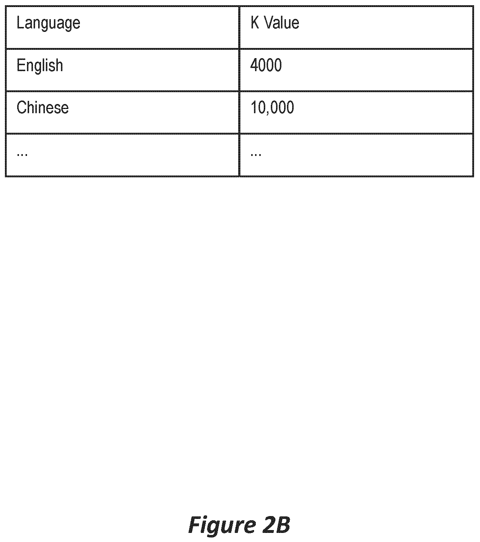

Attention will now be directed to Figure 2B which illustrates various possible K values which are dependent on the language in which the training batches are represented. For example, the English language corresponds to a typical tuning of approximately a 4000 token vocabulary output while the Chinese language corresponds to a typical tuning of approximately 10,000 vocabulary tokens. It should be appreciated that the calculations in the disclosed examples are done using a K value of 4000 assuming an English language training data set. However, any language and its corresponding $K$ value will affect the memory storage required for storing the transformed embeddings as represented by variable $h$.

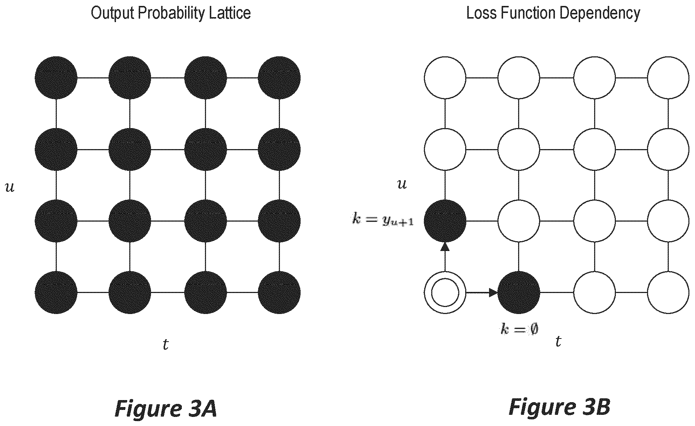

Attention will now be directed to Figure 3A and Figure 3B. Figure 3A represents an output probability lattice for the training data sets described herein. This output probability lattice represents all possible alignments between the audio data and corresponding transcriptions. Figure 3B represents an output probability lattice highlighting the tokens or outputs that are used as part of the loss function.

As illustrated by the highlighted lattice points shown in Fig. 3B, the loss function only depends at lattice node $t = 0$, $u = 0$, on the probability outputs of the next blank token represented at $t = 1$, $u = 0$and the next non-blank token at $t = 0$ $u = 1$. All other outputs, represented by the empty circles, are not needed to finish the training of the model for that lattice point. Then, at lattice point or node $t = 1$, $u = 1$, the loss function would only depend on the probability outputs of the corresponding next blank token represented at $t = 2$, $u = 1$ and the next non-blank token at $t = 1$, $u = 2$, etc., until the entire lattice is traversed during training. This means that only two probability outputs are required at each lattice node (t,u), namely for the next non-blank token and the next blank token at that lattice node (t,u). The remaining probability data is useful for backpropagation when tuning the model based on the calculated loss, but the additional probability outputs are not necessary for actually calculating the loss during the training.

Improved Training for Neural Transducers: Reducing ($h$) tensor

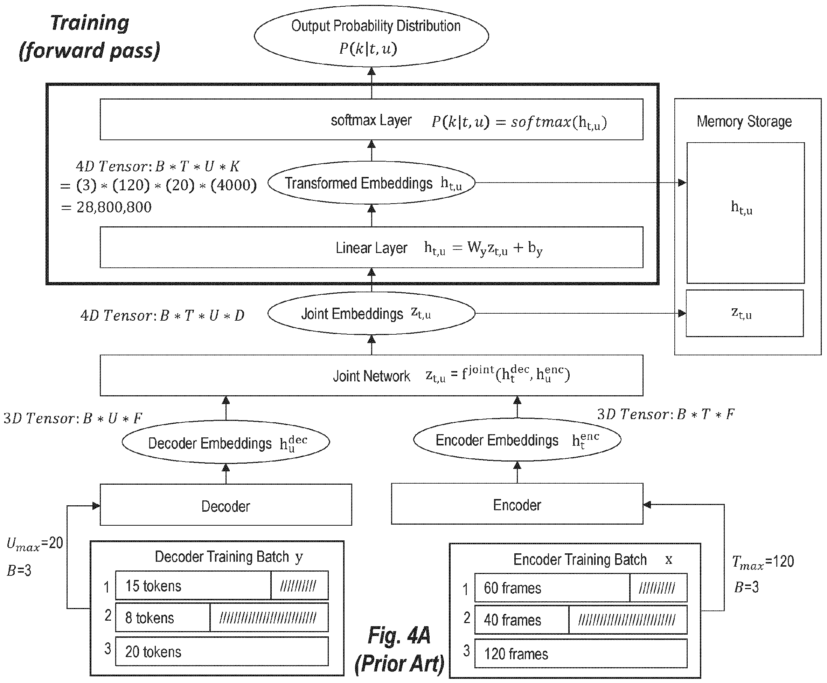

Attention will now be directed to Fig. 4A, which is another representation of the conventional neural transducer shown in Fig. 2A, showing an implementation of training a forward pass of a conventional RNN-T. Because the transformed embeddings represented by variable $h_{t,u}$ require much more storage then the joint embeddings $z_{t,u}$ (or the most storage out of any tensor in the training process), the disclosed embodiments are directed to reducing the memory storage and computation needed for generating the transformed embeddings as represented by the bolded box in Fig. 4A.

As noted before the loss function for training the RNN-T, also referred to herein as a neural network transducer, only depends on the next blank and the next token. The disclosed embodiments include systems and methods for efficient training of an RNN-T to generate a modified RNN-T model, by only outputting or storing the next blank and the next token at each time instance of the output lattice during training to significantly reduce the memory storage needed to train on the decoder training batch Y and encoder training batch X.

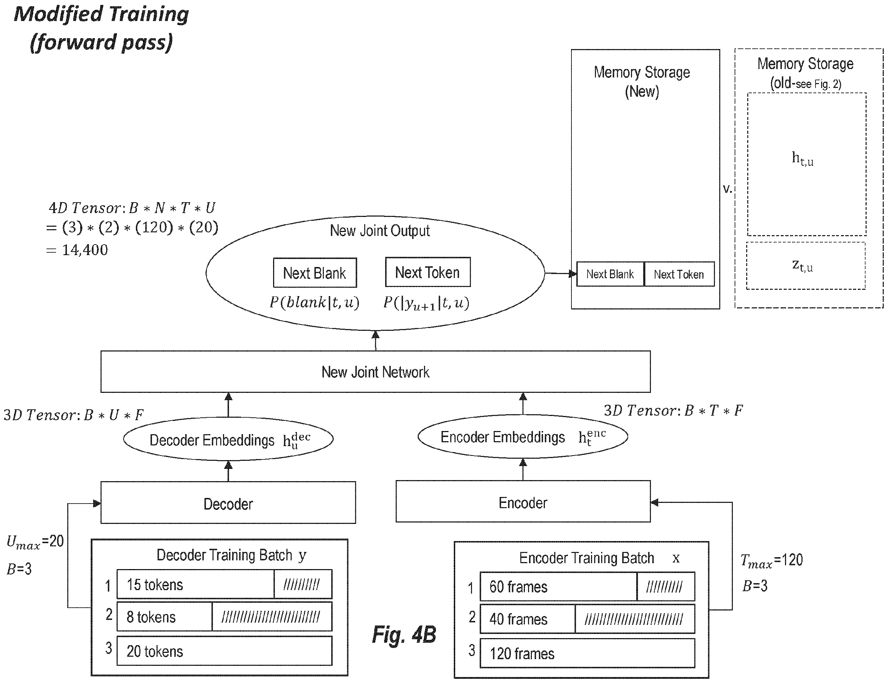

Attention will now be directed to Fig. 4B, which represents a new system and method for training an RNN-T network. This is accomplished by including a new joint network which is forced to output only the next blank token and the next non-blank token as part of the new joint output for each time instance of the output. This new joint output is stored in the memory storage in lieu of the previous transformed embeddings represented by variable $h_{t,u}$ (also referred to herein more simply as variable H or h). This new 4D tensor is represented by B * N * T * U which is the batch times the number of token outputs times the time times the token length which equals 3 * 2 * 120 * 20. This equals 14,400. This is significantly less memory storage than the previous transformed embeddings 4D tensor which equated to over 28 million.

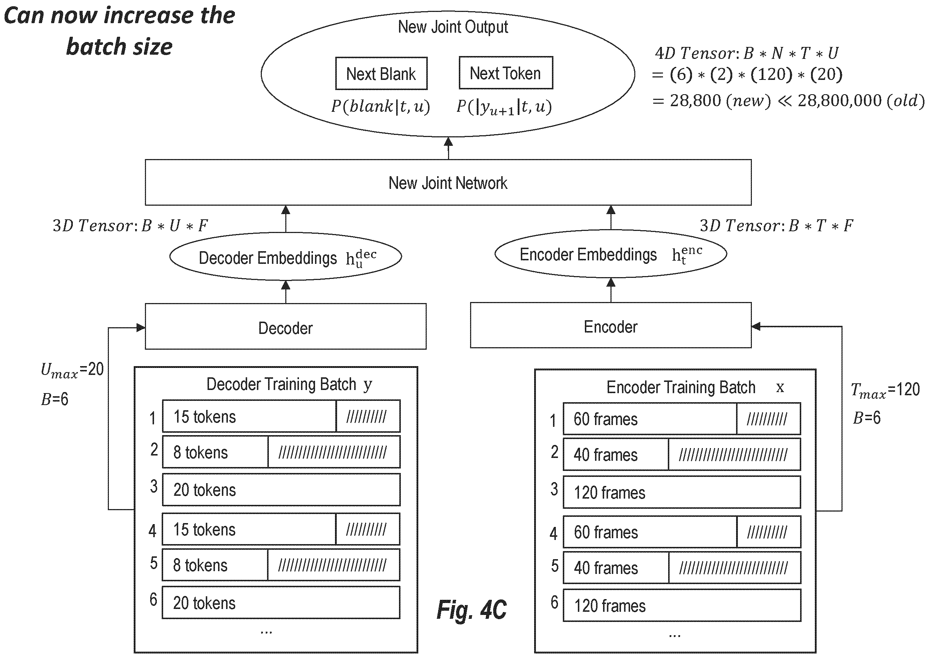

Attention will now be directed to Fig. 4C, which illustrates one of the technical benefits of this new training method and corresponding training systems. As described previously by forcing the joint network to only output the next blank and the next token, the memory needed to store the corresponding 4D tensor is significantly decreased as compared to conventional methods and systems. Because of the reduced storage required during training, the decoder training batch and encoder training batches can be enlarged to represent more training examples.

As shown by way of another example in Fig. 4C, the decoder training batch and encoder training batches are doubled now representing six different utterances in both text data and audio data. The new joint output is represented by the new 4D tensor B * N * T * U, which equals 6 * 2 * 120 * 20, or a 4D tensor size of 28,800. Thus, while the training batches were doubled in size, the memory storage required by this example is still a thousand times less than the storage previously required by the smaller training batch in the conventional systems.

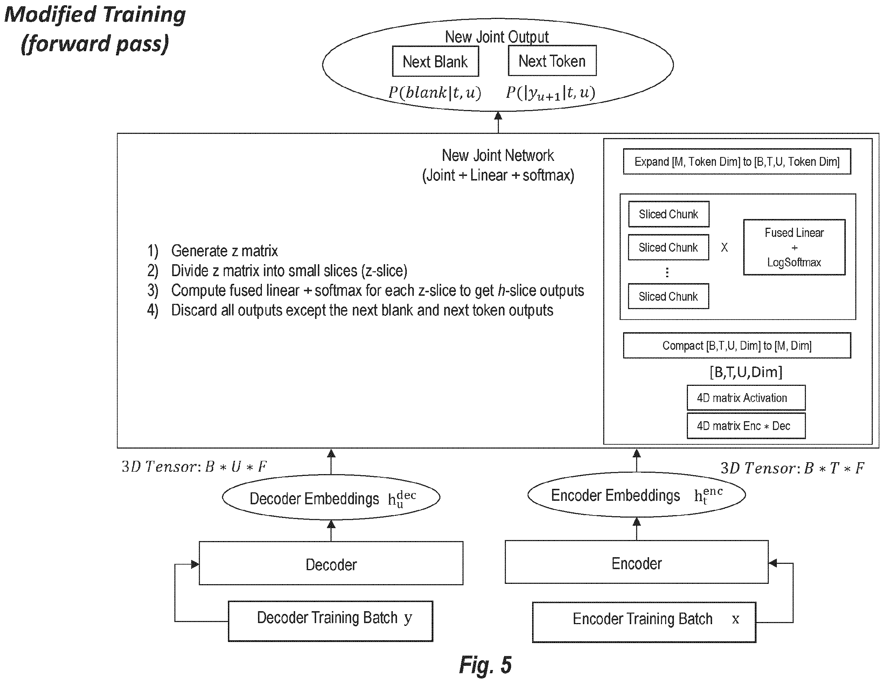

Attention will now be directed to Fig. 5, which represents a detailed view of the new joint network corresponding to the modified training process described above with respect to Figs. 4B and 4C.

As shown, the new joint network is a fused joint network or combined joint network representing the joint plus linear plus softmax layers of the previously illustrated conventional RNN-T network. This new fused or combined joint network performs the following steps in order to force the new joint network to only output the next blank and next token. In particular, the modified new joint network divides the computation of the transformed embeddings (h) into small slices. The new joint network generates a combined embedding matrix representative of joint embeddings z.

The new combined embedding matrix formed by the new joint network represents the combined embeddings of the decoder embeddings and the encoder embeddings, only divided up into small z-slices. For each small z-slice, the system computes a fused linear and softmax transformation and operation for each z-slice to get corresponding h-slice outputs. After generating all of the *h*-slices, the system discards all of the outputs except the outputs representing the next blank and next token outputs, as previously described.

As further described, these tokens are then used to calculate the loss and perform backpropagation to finish training the model on the training data. In this manner, the memory requirements during training and for calculating the loss are significantly reduced, at least during the forward pass of the training process, and while providing the system a way to maintain the entire transformed embedding tensor for the softmax operation, by only providing and storing the necessary token outputs for calculating the loss function.

In other words, the system generates a first 4D tensor matrix by combining the encoder and decoder embeddings. The system then performs the 4D matrix activation which is represented by a 4D tensor [B, T, U, Dim]. this activation matrix represents the output of an activation function applied to the 4D matrix representing the combined encoder and decoder embeddings. The activation function is performed by applying a non-linear function after every matrix multiplication so that the system can learn non-linear or functional relationships between nodes of the neural network, not just linear relationships.

The output of the activation function (i.e., activation matrix) is related to how changes to the network weights will affect the final output. This is important information for the system to understand in order to perform backpropagation (or updating of the weights) based on identifying errors in the output. (Errors in the output are identified via the loss function - where the system knows there are errors in the output when the loss is not zero, or near zero since loss represents the difference between the model output and the ground truth).

The system then compacts this 4D matrix into a 2D matrix represented by [M, D]. This compacted matrix is divided into different sliced chunks. Each slice chunk undergoes a fused linear and log softmax transformation operation. This is then expanded from the M token dimension to the [B, T, U] token dimension. This token dimension, as described previously is now based on the two values (i.e., the output for the next non-blank lattice point and the output for the blank), instead of either the dimension of the model or the dimension of the vocabulary outputs K.

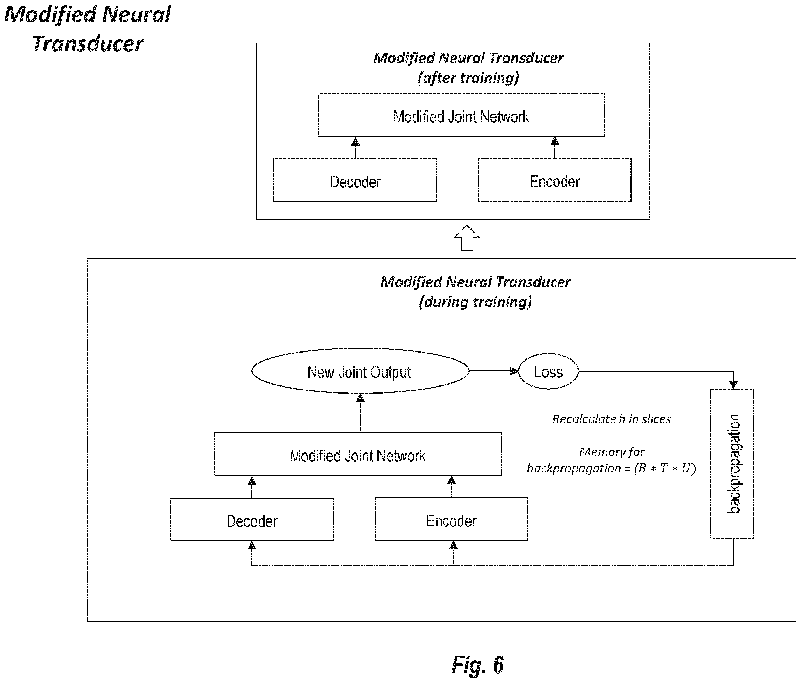

Attention will now be directed to Fig. 6, which represents an example embodiment of a backward pass or backpropagation of the modified training process after the loss is calculated and the corresponding modified model. As shown in Fig. 6, the loss is calculated based on the new joint output comprising the next blank output and the next token output according to equation 6.

After calculating the loss function, an improved backward pass or backpropagation of the new training process/method is performed. For example, as shown in Fig. 6, after the loss is determined, instead of having to store h in its entirety, the system recalculates *h* in small slices of the (*t,u*) lattice indices (as described previously with respect to the forward pass of the training process). This is a custom backpropagation implementation to reduce the memory storage needed to complete the training of the model and update all of the model layers/parameters.

As further shown in Fig. 6, after the training is completed, the system is able to access a modified RNN-T network which is now modified/updated based on minimizing the loss generated based on the training data (i.e., decoder training batch and encoder training batch).

Thus, the disclosed embodiments beneficially reduce the memory storage requirements during both the forward and backward passes of the training process from B*T*U*K (e.g., 3*120*20*4000) to B*N*T*U (e.g., (3*2*120*20), where B represents the number of utterances in the batch, T represents the maximum frame length or time of the utterances in the encoder training batch, U represents the maximum token length of the utterances in the decoder training batch, K represents the vocabulary or output size of the corresponding language in which the training datasets are provided, and N represents the number of tokens in the final output (i.e., token dimension). In practice, K is often 10^3 to 10^5, while N is only 2 (e.g., the next blank output and the next token output) in the disclosed embodiments, regardless of the training batch size or model dimension size. Thus, by removing it from the space complexity (i.e., as represented by the 4D tensor), the memory requirements of the joint and softmax layers of the training process are reduced by a factor from at least 1,000 to over 10,000, thereby reducing the memory requirements for the overall training process.

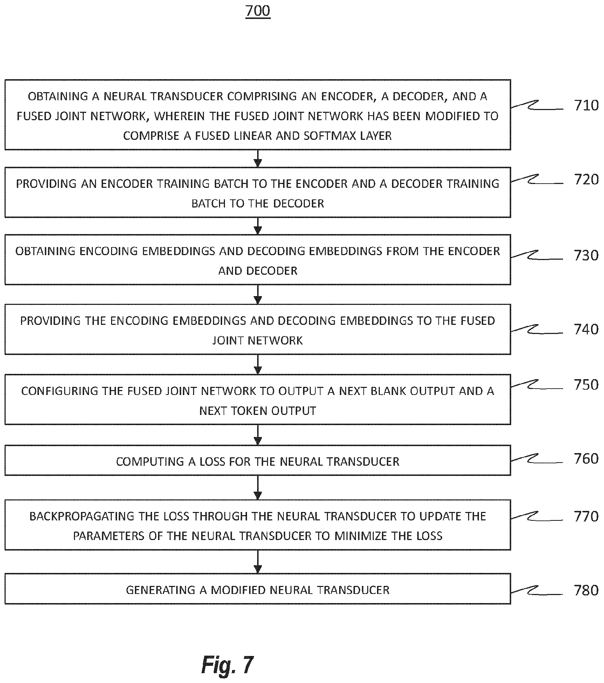

The disclosed embodiments described above are also directed to improved methods for training RNN-T models. Attention will now be directed to Fig. 7, which represents a flowchart of acts associated with the disclosed methods for space-efficient training of RNN-T models.

As shown, the disclosed methods include acts of a system obtaining a neural transducer comprising an encoder, a decoder, and a fused joint network, wherein the fused joint network has been modified to comprise a fused linear and softmax layer (act 710).

The acts also include the system providing an encoder training batch to the encoder and a decoder training batch to the decoder (act 720). The encoder training batch comprises audio data and the decoder training batch comprises corresponding textual transcriptions.

Next, the system obtains encoding embeddings and decoding embeddings from the encoder and decoder, respectively (act 730). The system also provides the encoding embeddings and decoding embeddings to the fused joint network (act 740) and configures or utilizes the fused joint network to output a next blank output and a next token output for storage, which will be used to calculate loss (act 750), while discarding or otherwise refraining from storing other prediction outputs required for backpropagation based on the loss.

The system also computes a loss for the neural transducer using the stored blank and the next token output that was stored (act 760). Then, after calculating the loss, the system backpropagates the loss through the neural transducer to update the parameters of the neural transducer to minimize the loss (act 770), which may include recalculating outputs that were not stored by the fused joint network.

The result of the backpropagation is the generation of a modified neural transducer having modified parameters based on the loss backpropagation (act 780).

As also described earlier, the system may also configure or utilize the fused joint network to divide a computation of joint embeddings based on the encoding embeddings and decoding embeddings into slices and to compute a fused linear and softmax function for each slice of the joint embeddings.

The fused joint network is configured to discard all outputs from the computation of each slice, except for the next blank output and the next token output, as described, which can save significant storage, as compared to conventional systems when computing the loss.

During the backpropagation, the system will recalculate the joint embeddings by dividing the computation of joint embeddings into slices.

In some instances, the system may also dynamically manage memory storage by at least one of (a) increasing the batch size and/or (b) storing slices of transformed embeddings based on a memory storage maximum capacity and/or a predetermined threshold of memory storage, as will be referenced in more detail below.

<u>Improved Training for Neural Transducers: Reducing (z) tensor</u>

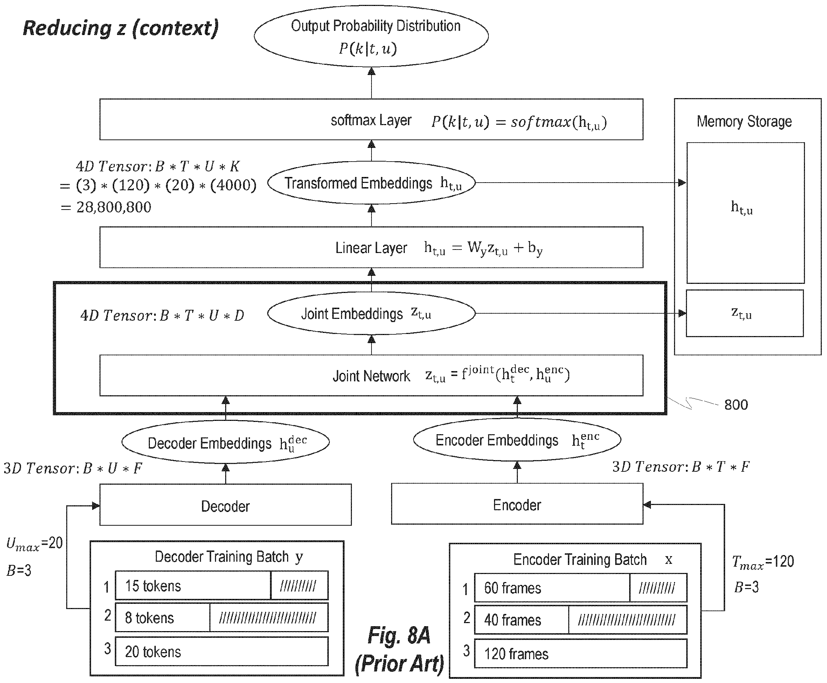

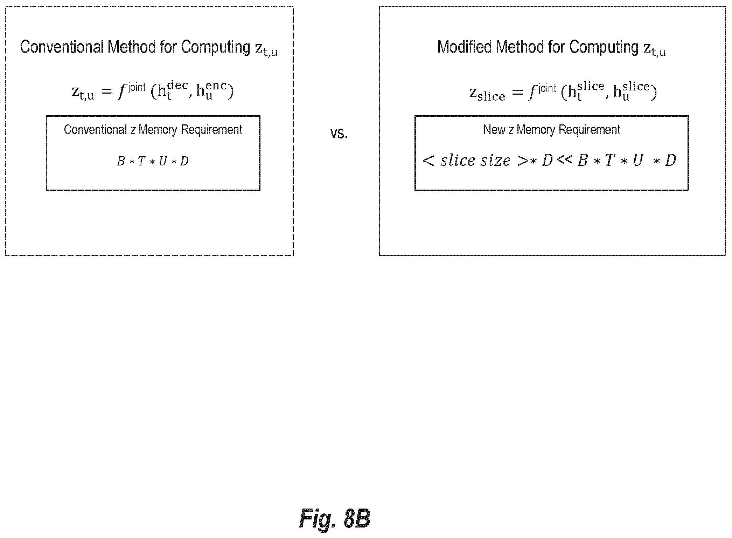

Attention will now be directed to Figs. 8A and 8B. Fig. 8A is representative of the conventional RNN-T shown in Fig. 2A and memory storage associated with the RNN-T during training. As shown, besides the 4D tensor for the transformed embeddings ($h$), the 4D tensor for the joint embeddings ($z_{t,u}$) is also stored in the memory storage.

With regard to the highlighted region of this figure (box 800), it is noted that the disclosed embodiments include improved methods for training RNN-T networks that are implemented by reducing the memory storage needed for the 4D tensor ($z$) corresponding to the joint embeddings ($z_{t,u}$). This is shown more particularly with regard to the storage requirement comparisons required for storing the joint embedding with the convention and the modified RNN-T models.

Referring now to Fig. 8B, reducing the memory storage requirements for computing and storing the joint embeddings $z_{t,u}$ is accomplished by dividing the computation of ($z_{t,u}$) into small slices of (t,u) indices. This sliced calculation is also performed during the backward pass of training in a similar manner for applying the loss to the parameters of the same slices of the corresponding (t,u) indices during backpropagation.

As shown in Fig. 8B, the old memory storage required by the joint embedding tensor (z) is B*T*U*D, where B represents the number of utterances in a batch, T represents the maximum time length of the utterances, U represents the maximum token length of the utterances, and D represents the dimension size of the neural network. However, with the improved (z) calculation method described herein, the new memory storage requirement is now based on a per $z_{slice}$ basis (i.e., <slice size> * D). Here, the <slice size> * D requires much less memory than is required by the conventional (z) calculation of B*T*U*D. This $z_{slice}$ tensor having the lower memory requirement is then used by the rest of the network (e.g., the Linear Layer of Fig. 8A). It should be appreciated that the improved method for managing the calculation and storage of the joint embeddings can be implemented independently or in combination with the improved method for managing the calculation and storage of the transformed embeddings corresponding to the (h) 4D tensor. For example, if the generation of the joint embeddings is fused with the Linear Layer and softmax Layer at the GPU kernel level, $z_{slice}$ may be calculated on-demand and cached in the GPU cores. This would not be viewed as a memory requirement from the GPU's perspective.

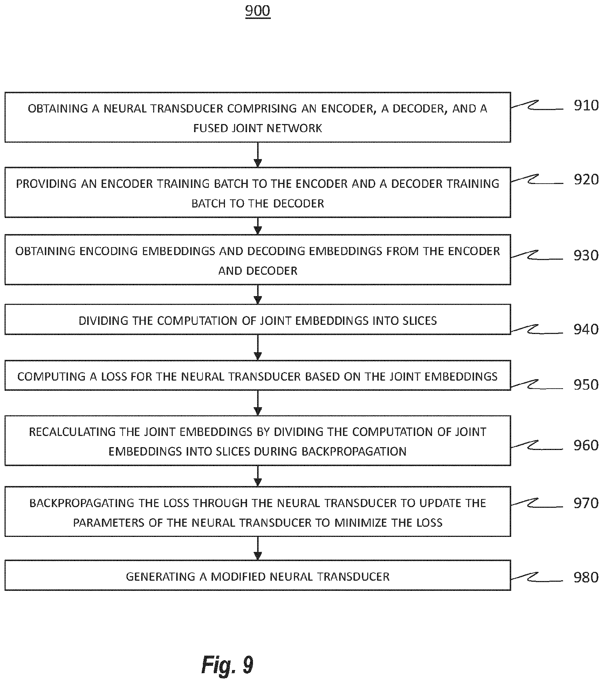

Attention will now be directed to Fig. 9, which illustrates a flowchart corresponding to the storage efficient training referenced in Figs. 8A and 8B.

As noted, the disclosed methods include acts for a system obtaining a neural transducer comprising an encoder, a decoder, and a fused joint network, wherein the fused joint network has been modified to comprise a fused linear and softmax layer (act 910).

The acts also include the system providing an encoder training batch to the encoder and a decoder training batch to the decoder (act 920). The encoder training batch comprises audio data and the decoder training batch comprises corresponding textual transcriptions.

Next, the system obtains encoding embeddings and decoding embeddings from the encoder and decoder, respectively (act 930). Systems also divide a computation of joint embeddings into discrete slices during training (act 940) and compute a loss for the neural transducer based on the training with the joint embeddings (act 950).

The system also recalculates the joint embeddings by dividing the computation of joint embeddings into slices of a predetermined size (e.g., a set number of bytes) or quantity of slices (e.g., each batch of embeddings may be split into 4, 10, 16, 25, or another quantity of slices), which can reduce the storage requirement for each slice and collective storage of all slices during backpropagation (act 960). The system backpropagates the loss through the slices of the neural transducer to update the parameters of the neural transducer to minimize the loss (act 970) to generate a modified neural transducer (980).

In some instances, the slices of the computation of joint embeddings are divided based on the memory storage capacity of a computing system performing the method. The less memory capacity the system has, the more slices it will use.

In other configurations, the system will split the joint embeddings into slices based on the computational capacity of the computing system performing the method, such that the quantity of slices will increase as the computational capacity of the computing system decreases and that the quantity of slices will decrease as that computational capacity increases.

During the training on the sliced joint embeddings, the computation of the joint embeddings will include applying a non-linear function after every matrix multiplication.

The system will compute a loss based on a difference between ground truth and the model output generated by applying the neural transducer to training data that has been processed into the sliced joint embeddings, as described.

The system will also recalculate the joint embeddings during backpropagation by using the same configuration of slices of the joint embeddings used during a forward pass of the training.

## Improved Training for Neural Transducers: dynamic storage of (h) tensor slices

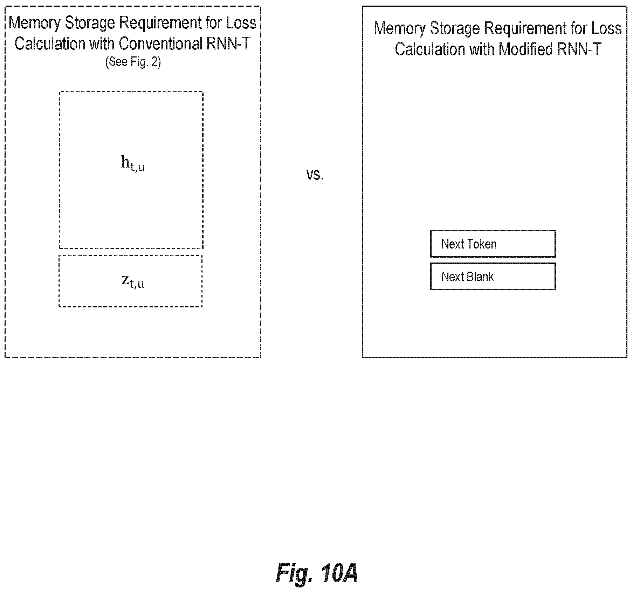

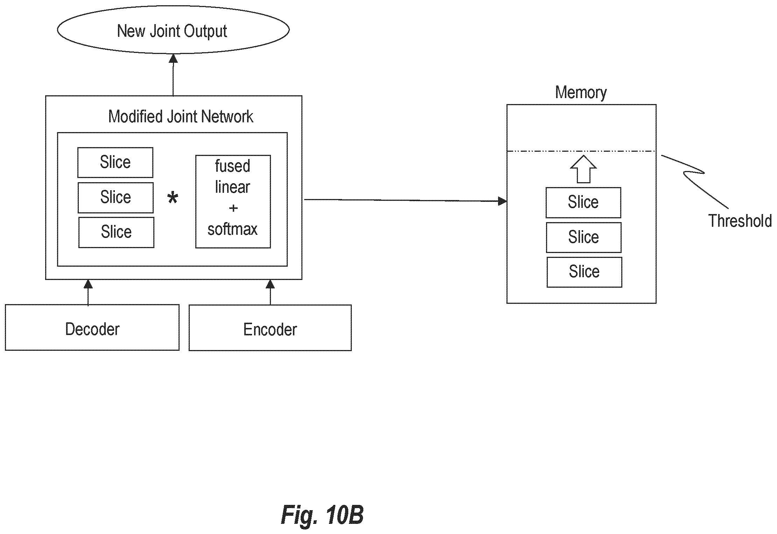

Attention will now be directed to Fig. 10A, which illustrates a comparison of the memory storage needed in the conventional methods for training RNN-T models versus the memory storage needed in the improved methods for training RNN-T models described herein. As shown in Fig. 10A, by reducing the size of the (h) tensor down to only two outputs (next blank and next token), there is a significant amount of memory storage available.

As described in relation to Fig. 4C, one way to capitalize on this increased availability in storage is to increase the batch size, thereby providing greater amounts of training data to the model. Greater amounts of training data improve the efficacy of the training as well as improve the accuracy of the model outputs.

In one alternative embodiment, the system may also capitalize on the increased availability in memory storage by storing portions or slices of the (h) tensor as they are calculated in the sliced calculation method.

When storing h-slices until a threshold is reached or the memory storage capacity is reached, the rest of the h-slices are discarded. Then, after the loss is calculated and to re-access the entire h-tensor for backpropagation, the system will only need to recalculate those h-slices that were not stored previously during the forward pass. This reduces the computational expense of the backward pass of the training process, thereby further improving upon the disclosed embodiments herein.

It will be appreciated that the system can be configured to dynamically manage the memory storage, either by increasing the batch size, storing h-slices, or a combination of both. The system can be configured to optimize either scenario or a combination of scenarios based on the type of training data, the type of training task (that may require more or less training data to achieve improved or effective training results), the size of the model (i.e., models with greater numbers of parameters often require more training data to converge as compared to models with lesser numbers of parameters), or user-input specifications.

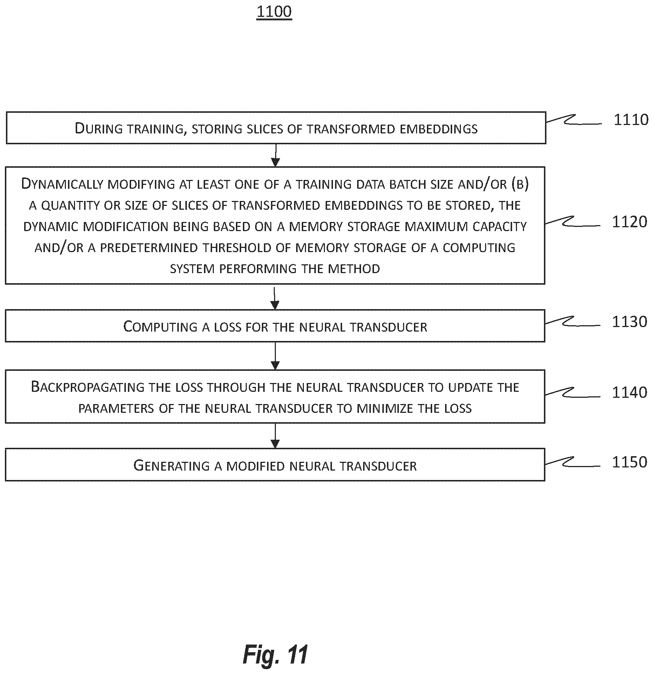

Attention will now be directed to Fig. 11, which illustrates a flowchart for performing the dynamic storage modifications during training, as just described. As shown, the disclosed methods include storing slices of transformed embeddings, which have been generated according to the previously disclosed methods (act 1110). Then, the system will dynamically modify at least one of a training data batch size and/or (b) a quantity or size of slices of transformed embeddings to be stored. The dynamic modification is based on a memory storage maximum capacity and/or a predetermined threshold of memory storage of a computing system performing the method (act 1120).

Next, the system will calculate the loss during the training, as previously described (act 1130), and backpropagate the loss through the neural transducer to update the parameters of the neural transducer in a manner that minimizes the loss for subsequent passes of the training data (act 1140). In this manner, by modifying the parameters of the model during the backpropagation at the different layers of the neural transducer the system will generate a modified neural transducer (act 1150).

Notably, the slices of transformed embeddings can be divided based on different slicing schemes, such as based on slices of a predetermined size and/or memory storage capacity or computational capacity of the computing system performing the training.

It is also noted that the system may perform dynamic storage of the slices of transformed embeddings by storing slices until the memory storage maximum capacity is reached and then discarding probability data for additional slices other than probability data for the next blank output and a next token for each lattice node in additional slices processed during the training.

Alternatively, the system may store slices of transformed embeddings until a threshold of memory storage is reached, and then discard probability data for additional slices other than probability data for a next blank output and a next token for each lattice node in additional slices processed during the training.

Improved Training for Neural Transducers: reduced computational expense for training batches without padding

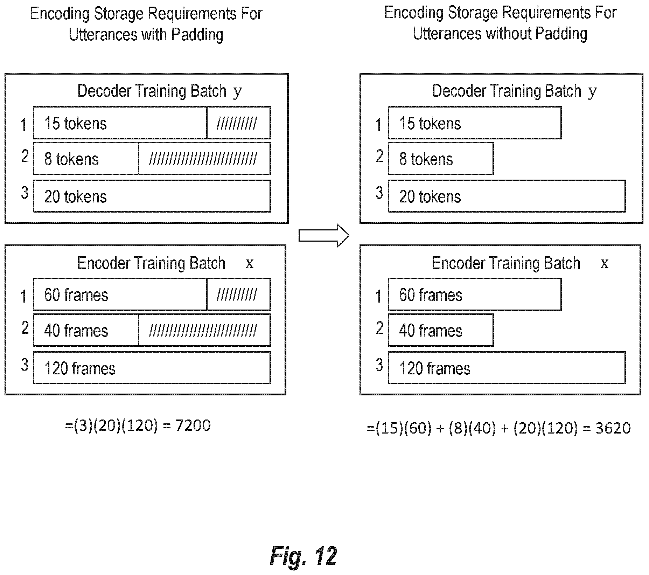

Attention will now be directed to Fig. 12, which illustrates an alternate improved method for training RNN-T models. As shown in Fig. 12, in conventional systems (even in the improved training methods previously described herein), the training batches have to be modified to include padding for each utterance in the training batch so that each utterance comprises a total length equaling the token length or time length of the longest/largest utterance. For example, since the largest utterance in decoder training batch (y) is 20 tokens, utterance 1 and utterance 2 must be padded with additional tokens so that all of the utterances are now the same length.

However, when the computation of z is divided (see Figs. 8A-9), and with the computation of h (see Figs. 4A-5), and the computation of P in (t,u) indices, in the manner described previously, the paddings may be removed (or never added in the first place) in the training batches. This saves on the computation that was previously wasted on including the padding tokens in the aforementioned calculations.

One specific way to accomplish this training process using padding-less training batches is by compacting the high-dimensional tensors into lower-dimensional tensors while keeping a consistent mapping. For example, the tensor represented by z(t,u) can be compacted to z(i), wherein the mapping comprises the information to map (t,u) indices to (i) indices. After P(k| i) is obtained (where k=blank or k=y(u+1)) is obtained, the system expands the compacted tensor back into P(k|t,u). The reverse process is performed during backpropagation, in order to reduce the computational expense for the training batches (which are still padding-less in the backward pass of the training process).

It should be appreciated that in some instances, training samples are batched together by audio frame length or token length in order to reduce the amount of padding needed for a given training minibatch prior to being processed by the joint layer.

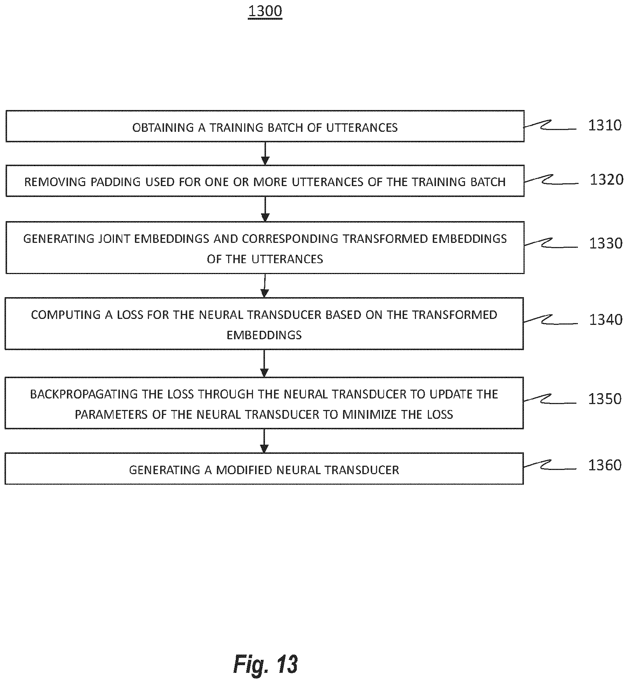

Attention will now be directed to Fig. 13, which illustrates a flowchart of acts associated with removing padding of the training sample utterances during training prior to generating embeddings for the utterances.

As shown, the disclosed embodiments include obtaining a training batch of utterances (act 1310), removing padding used for one or more of the utterances (act 1320), and generating joint embeddings and corresponding transformed embeddings of the utterances (after the padding has been removed) (act 1330). The system also computes the loss for the neural transducer based on the transformed embeddings that were formed from the utterances having the padding removed.

Example Computing Systems

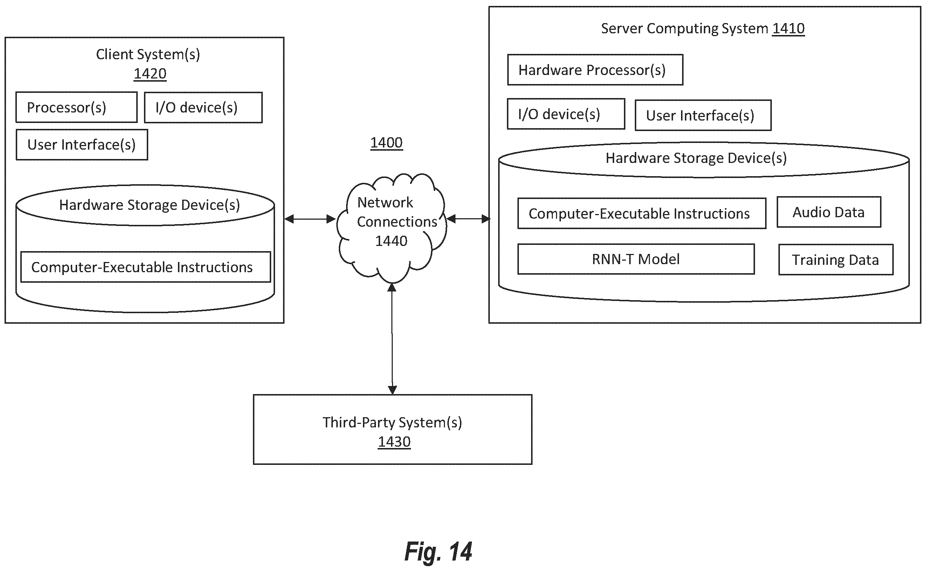

Attention will now be directed to Fig. 14, which illustrates a computing environment 1400 for implementing any of the disclosed embodiments herein.

Attention will now be directed to Fig. 14, which illustrates computing environment 1400 that includes client system(s) 1420 and third-party system(s) 1430 in communication (via a network 1440) with computing system 1410. As illustrated, computing system 1410 is a server computing system configured to compile, modify, and implement a neural transducer configured to perform speech recognition on multi-speaker speech data, including overlapping speech from multiple speakers.

The computing system 1410, for example, includes one or more processor(s) (such as one or more hardware processor(s) and one or more hardware storage device(s) storing computer-readable instructions. One or more of the hardware storage device(s) is able to house any number of data types and any number of computer-executable instructions by which the computing system 1410 is configured to implement one or more aspects of the disclosed embodiments when the computer-executable instructions are executed by the one or more hardware processor(s). The computing system 1410 is also shown including user interface(s) and input/output (I/O) device(s).

As shown in Fig. 14, the hardware storage device(s) is shown as a single storage unit. However, it will be appreciated that the hardware storage device(s) can include a distributed storage that is distributed to several separate and sometimes remote systems and/or third-party system(s). The computing system 1410 can also comprise a distributed system with one or more of the components of computing system 1210 being maintained/run by different discrete systems that are remote from each other and that each performs different tasks. In some instances, a plurality of distributed systems performs similar and/or shared tasks for implementing the disclosed functionality, such as in a distributed cloud environment.

In some instances, the audio data is natural language audio and/or synthesized audio data. Input audio data is retrieved from previously recorded files such as video recordings having audio or audio-only recordings. Some examples of recordings include videos, podcasts, voicemails, voice memos, songs, etc. Audio data is also retrieved from actively streaming content which is live continuous speech such as a news broadcast, phone call, virtual or in-person meeting, etc. In some instances, a previously recorded audio file is streamed. Natural audio data is recorded from a plurality of sources, including applications, meetings comprising one or more speakers, ambient environments including background noise and human speakers, etc. It should be appreciated that the natural language audio comprises one or more spoken languages of the world's spoken languages. Thus, the neural transducer is trainable in one or more languages.

The training data for the baseline neural transducer comprises spoken language utterances (e.g., natural language and/or synthesized speech) and corresponding textual transcriptions (e.g., text data). The training data comprises text data and natural language audio and simulated audio that comprises speech utterances corresponding to words, phrases, and sentences included in the text data. In other words, the speech utterances are the ground truth output for the text data input.

The computing system is in communication with client system(s) 1420 comprising one or more processor(s), one or more user interface(s), one or more I/O device(s), one or more sets of computer-executable instructions, and one or more hardware storage device(s). In some instances, users of a particular software application (e.g., Microsoft Teams) engage with the software at the client system which transmits the audio data to the server computing system to be processed, wherein the predicted labels are displayed to the user on a user interface at the client system. Alternatively, the server computing system is able to transmit instructions to the client system for generating and/or downloading a neural transducer model, wherein the processing of the audio data by the model occurs at the client system.

The computing system is also in communication with third-party system(s). It is anticipated that, in some instances, the third-party system(s) 1430 further comprise databases housing data that could be used as training data, for example, text data not included in local storage. Additionally, or alternatively, the third-party system(s) 1430 includes machine learning systems external to the computing system 1410.

It will be appreciated that the disclosed embodiments may include, be practiced by, or implemented by a computer system (e.g., computing system 1410) that is configured with computer storage that stores computer-executable instructions that, when executed by one or more processing systems (e.g., one or more hardware processors) of the computer system, cause various functions to be performed, such as the acts associated with the various methods recited above.

Embodiments within the scope of the present disclosure also include physical and other computer-readable media for carrying or storing computer-executable instructions and/or data structures. Such computer-readable media can be any available media that can be accessed by a general-purpose or special-purpose computer system. Computer-readable media that store computer-executable instructions are physical storage media. Computer-readable media that carry computer-executable instructions are transmission media. Thus, by way of example, embodiments of the disclosure can comprise at least two distinctly different kinds of computer-readable media: physical computer-readable storage media and transmission computer-readable media.

Physical computer-readable storage media includes random access memory (RAM), read-only memory (ROM), electrically erasable programmable ROM (EEPROM), compact disk ROM (CD-ROM), or other optical disk storage (such as compact disks (CDs), digital video disks (DVDs), etc.), magnetic disk storage or other magnetic storage devices, or any other hardware storage devices which can be used to store desired program code in the form of computer-executable instructions or data structures and which can be accessed by a general purpose or special purpose computer.

When information is transferred or provided over a network or another communications connection (either hardwired, wireless, or a combination of hardwired or wireless) to a computer, the computer properly views the connection as a transmission medium. Transmission media can include a network and/or data links that can be used to carry desired program code means in the form of computer-executable instructions or data structures and which can be accessed by a general-purpose or special-purpose computer. Combinations of the above are also included within the scope of computer-readable media.

Further, upon reaching various computer system components, program code in the form of computer-executable instructions or data structures can be transferred automatically from transmission computer-readable media to physical computer-readable storage media (or vice versa). For example, computer-executable instructions or data structures received over a network or data link can be buffered in RAM within a network interface module (e.g., a network interface card (NIC)), and then eventually transferred to computer system RAM and/or to less volatile computer-readable physical storage media at a computer system. Thus, computer-readable physical storage media can be included in computer system components that also (or even primarily) utilize transmission media.

Computer-executable instructions comprise, for example, instructions and data that cause a general-purpose computer, special-purpose computer, or special-purpose processing device to perform a certain function or group of functions. The computer-executable instructions may be, for example, binaries, intermediate format instructions such as assembly language, or even source code. Although the subject matter has been described in language specific to structural features and/or methodological acts, it is to be understood that the subject matter defined in the appended claims is not necessarily limited to the described features or acts described above. Rather, the described features and acts are disclosed as example forms of implementing the claims.

Those skilled in the art will appreciate that the invention may be practiced in network computing environments with many types of computer system configurations, including, personal computers, desktop computers, laptop computers, message processors, hand-held devices, multi-processor systems, microprocessor-based or programmable consumer electronics, network PCs, minicomputers, mainframe computers, mobile telephones, PDAs, pagers, routers, switches, and the like. The invention may also be practiced in distributed system environments where local and remote computer systems, which are linked (either by hardwired data links, wireless data links, or by a combination of hardwired and wireless data links) through a network, both perform tasks. In a distributed system environment, program modules may be located in both local and remote memory storage devices.

Alternatively, or in addition, the functionality described herein can be performed, at least in part, by one or more hardware logic components. For example, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

Efficient training is provided for models comprising RNN-T (recurrent neural network transducers). The model transducers comprise an encoder, a decoder, and a fused joint network. The fused joint network receives encoding and decoding embeddings from the encoder and decoder. During training, the model stores the probability data for the next blank output and the next token at each time step rather than storing all probabilities for all possible outputs. This can significantly reduce requirements for memory storage, while still preserving the relevant information required to calculate the loss that will be backpropagated through the neural transducer during training to update the parameters of the neural transducer and to generate a trained or modified neural transducer. The computation of embeddings can also be divided into small slices and some of the utterance padding used for the training samples can also be removed to further reduce the memory storage requirements.

In view of the foregoing description, it will be appreciated that the present invention can also be described in accordance with the following numbered clauses:

Clause 1. A method for training a neural transducer, the method comprising: obtaining a neural transducer comprising an encoder, a decoder, and a fused joint network, wherein the fused joint network has been modified to comprise a fused linear and softmax layer; providing an encoder training batch to the encoder and a decoder training batch to the decoder; obtaining encoding embeddings and decoding embeddings from the encoder and decoder, respectively; providing the encoding embeddings and decoding embeddings to the fused joint network; configuring the fused joint network to output a next blank output and a next token output; computing a loss for the neural transducer; backpropagating the loss through the neural transducer to update the parameters of the neural transducer to minimize the loss; and generating a modified neural transducer.

Clause 2. The method of clause 1, wherein the encoder training batch comprises audio data and the decoder training batch comprises corresponding textual transcriptions.

Clause 3. The method of clause 1, wherein the fused joint network is configured to divide a computation of joint embeddings based on the encoding embeddings and decoding embeddings into slices.

Clause 4. The method of clause 3, wherein the fused joint network is configured to compute a fused linear and softmax function for each slice of the joint embeddings.

Clause 5. The method of clause 4, wherein the fused joint network is configured to discard all outputs from the computation of each slice, except for the next blank output and the next token output.

Clause 6. The method of clause 5, wherein the backpropagation of the loss through the neural transducer includes recalculating the joint embeddings by dividing the computation of joint embeddings into the slices.

Clause 7. The method of clause 1, wherein the neural transducer is configured to dynamically manage memory storage by at least one of (a) increasing the batch size and/or (b) storing slices of transformed embeddings based on a memory storage maximum capacity and/or a predetermined threshold of memory storage.

Clause 8. A method for training a neural transducer, the method comprising: during training, dividing a computation of joint embeddings into slices; computing a loss for the neural transducer based on the training with the joint embeddings; recalculating the joint embeddings by dividing the computation of joint embeddings into slices during backpropagating the loss through the slices of the neural transducer to update the parameters of the neural transducer to minimize the loss; and generating a modified neural transducer.

Clause 9. The method of clause 8, wherein the slices of the computation of joint embeddings are divided based on a predetermined size.

Clause 10. The method of clause 8, wherein the slices of the computation of joint embeddings are divided based on a memory storage capacity of a computing system performing the method.

Clause 11. The method of clause 8, wherein the slices of the computation of joint embeddings are divided based on a computational capacity of a computing system performing the method.

Clause 12. The method of clause 8, wherein the computation of joint embeddings includes applying a non-linear function after every matrix multiplication.

Clause 13. The method of clause 8, wherein the loss is computed based on a difference between a model output generated by applying the neural transducer to training data and a ground truth output.

Clause 14. The method of clause 8, wherein the recalculating of the joint embeddings during backpropagation includes recomputing the joint embeddings in a same configuration of slices of the joint embeddings used during a forward pass of the training.

Clause 15. A method for training a neural transducer, the method comprising: during training, storing slices of transformed embeddings; and dynamically modifying at least one of: (a) training data batch size and/or (b) a quantity or size of slices of transformed embeddings to be stored, the dynamic modification being based on a memory storage maximum capacity and/or a predetermined threshold of memory storage of a computing system performing the method; computing a loss for the neural transducer based on the transformed embeddings; backpropagating the loss through the neural transducer to update the parameters of the neural transducer to minimize the loss; and generating a modified neural transducer.

Clause 16. The method of clause 15, wherein the slices of transformed embeddings are divided based on a predetermined size.

Clause 17. The method of clause 15, wherein the slices of transformed embeddings are divided based on the memory storage capacity of the computing system performing the method.

Clause 18. The method of clause 15, wherein the dynamic storing of slices of transformed embeddings includes storing slices until the memory storage maximum capacity is reached and then discarding probability data for additional slices other than probability data for a next blank output and a next token for each lattice node in additional slices processed during the training.

Clause 19. The method of clause 15, wherein the dynamic storing of slices of transformed embeddings includes storing slices until a threshold of memory storage is reached, and then discarding probability data for additional slices other than probability data for a next blank output and a next token for each lattice node in additional slices processed during the training.

Clause 20. A method for training a neural transducer, the method comprising: obtaining a training batch of utterances; removing padding used for one or more utterances of the training batch; generating joint embeddings and corresponding transformed embeddings of the utterances; computing a loss for the neural transducer based on the transformed embeddings; backpropagating the loss through the neural transducer to update the parameters of the neural transducer to minimize the loss; and generating a modified neural transducer.

The present invention may be embodied in other specific forms without departing from its spirit or characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

**Claims**

1. A method for training a neural transducer, the method comprising:

   obtaining a neural transducer comprising an encoder, a decoder, and a fused joint network, wherein the fused joint network has been modified to comprise a fused linear and softmax layer;
   providing an encoder training batch to the encoder and a decoder training batch to the decoder;
   obtaining encoding embeddings and decoding embeddings from the encoder and decoder, respectively;
   providing the encoding embeddings and decoding embeddings to the fused joint network;
   configuring the fused joint network to output a next blank output and a next token output;

computing a loss for the neural transducer; backpropagating the loss through the neural transducer to update the parameters of the neural transducer to minimize the loss; and generating a modified neural transducer.

2. The method of claim 1, wherein the encoder training batch comprises audio data and the decoder training batch comprises corresponding textual transcriptions.

3. The method of claim 1, wherein the fused joint network is configured to divide a computation of joint embeddings based on the encoding embeddings and decoding embeddings into slices.

4. The method of claim 3, wherein the fused joint network is configured to compute a fused linear and softmax function for each slice of the joint embeddings.

5. The method of claim 4, wherein the fused joint network is configured to discard all outputs from the computation of each slice, except for the next blank output and the next token output.

6. The method of claim 5, wherein the backpropagation of the loss through the neural transducer includes recalculating the joint embeddings by dividing the computation of joint embeddings into the slices.

7. The method of claim 1, wherein the neural transducer is configured to dynamically manage memory storage by at least one of (a) increasing the batch size and/or (b) storing slices of transformed embeddings based on a memory storage maximum capacity and/or a predetermined threshold of memory storage.

8. A method for training a neural transducer, the method comprising:

during training, dividing a computation of joint embeddings into slices; computing a loss for the neural transducer based on the training with the joint embeddings; recalculating the joint embeddings by dividing the computation of joint embeddings into slices during backpropagation; backpropagating the loss through the slices of the neural transducer to update the parameters of the neural transducer to minimize the loss; and generating a modified neural transducer.

9. The method of claim 8, wherein the slices of the computation of joint embeddings are divided based on a predetermined size.

10. The method of claim 8, wherein the slices of the computation of joint embeddings are divided based on a memory storage capacity of a computing system performing the method.

11. The method of claim 8, wherein the slices of the computation of joint embeddings are divided based on a computational capacity of a computing system performing the method.

12. The method of claim 8, wherein the computation of joint embeddings includes applying a non-linear function after every matrix multiplication.

13. The method of claim 8, wherein the loss is computed based on a difference between a model output generated by applying the neural transducer to training data and a ground truth output.

14. The method of claim 8, wherein the recalculating of the joint embeddings during backpropagation includes recomputing the joint embeddings in a same configuration of slices of the joint embeddings used during a forward pass of the training.

15. A method for training a neural transducer, the method comprising:

during training, storing slices of transformed embeddings; and dynamically modifying at least one of: (a) training data batch size and/or (b) a quantity or size of slices of transformed embeddings to be stored, the dynamic modification being based on a memory storage maximum capacity and/or a predetermined threshold of memory storage of a computing system performing the method; computing a loss for the neural transducer based on the transformed embeddings; backpropagating the loss through the neural transducer to update the parameters of the neural transducer to minimize the loss; and generating a modified neural transducer.

Run-Time

Neural Transducer

$$P(\hat{y}_{t+1}|y_1^u, x_1^t)$$

| <blank> | <vocabulary token> |

110  112

108

$z_{t,u}$

Joint Network

106

$h_t$

$h_u$

Decoder

102

Encoder

104

$y_1^u$

$x_1^t$

Fig. 1A
(Prior Art)

**Training**

$$\frac{\partial L}{\partial P(k|t,u)} = -\frac{\alpha(t,u)}{P(y|x)} \begin{cases} \beta(t,u+1) & \text{if} \quad k = y_{u+1} \\ \beta(t+1,u) & \text{if} \quad k = \emptyset \\ 0 & \text{otherwise} \end{cases}$$

Output Probability Distribution $P(k|t,u)$ (4) — 150

Loss $L = -lnP(y|x)$ (5) — 160

softmax Layer $P(k|t,u) = softmax(h_{t,u})$ (3) — 140

Transformed Embeddings $h_{t,u}$

Linear Layer $h_{t,u} = W_y z_{t,u} + b_y$ (2) — 130

Joint Embeddings $z_{t,u}$

Joint Network $z_{t,u} = f^{joint}(h_t^{dec}, h_u^{enc})$ (1) — 120

Backpropagation

Decoder Embeddings $h_u^{dec}$

Encoder Embeddings $h_t^{enc}$

Decoder

Encoder

Decoder Training Batch $y$

Encoder Training Batch $x$

*Fig. 1B*
*(Prior Art)*

EP 4 618 073 A2

**Training
(forward pass)**

Output Probability Distribution
$P(k|t, u). (4)$

softmax Layer $\quad P(k|t, u) = softmax(h_{t,u})\ (3)$

Memory Storage

$4D\ Tensor: B * T * U * K$
$= (3) * (120) * (20) * (4000)$
$= 28{,}800{,}000$

Transformed Embeddings $h_{t,u}$

$h_{t,u}$

Linear Layer $\quad h_{t,u} = W_y z_{t,u} + b_y\ (2)$

$4D\ Tensor: B * T * U * D$

Joint Embeddings $z_{t,u}$

$z_{t,u}$

Joint Network $\quad z_{t,u} = f^{joint}(h_t^{dec}, h_u^{enc})\ (1)$

$3D\ Tensor: B * U * F$

Decoder Embeddings $h_u^{dec}$

$3D\ Tensor: B * T * F$

Encoder Embeddings $h_t^{enc}$

Decoder

Encoder

$U_{max} = 20$

$B = 3$

| | Decoder Training Batch  y | |
|---|---|---|
| 1 | 15 tokens | /////////// |
| 2 | 8 tokens | ///////////////////////// |
| 3 | 20 tokens | |

210

*Fig. 2A
(Prior Art)*

$T_{max} = 120$

$B = 3$

| | Encoder Training Batch  x | |
|---|---|---|
| 1 | 60 frames | /////////// |
| 2 | 40 frames | ///////////////////////////// |
| 3 | 120 frames | |

220

17

| Language | K Value |
|----------|---------|
| English | 4000 |
| Chinese | 10,000 |
| ... | ... |

Figure 2B

Output Probability Lattice

*Figure 3A*

Loss Function Dependency

*Figure 3B*

**Training (forward pass)**

Output Probability Distribution $P(k|t,u)$

Memory Storage

softmax Layer $\quad P(k|t,u) = softmax(h_{t,u})$

$4D\ Tensor: B * T * U * K$
$= (3) * (120) * (20) * (4000)$
$= 28{,}800{,}800$

Transformed Embeddings $h_{t,u}$

$h_{t,u}$

Linear Layer $\quad h_{t,u} = W_y z_{t,u} + b_y$

$4D\ Tensor: B * T * U * D$ — Joint Embeddings $z_{t,u}$

$z_{t,u}$

Joint Network $\quad z_{t,u} = f^{joint}(h_t^{dec}, h_u^{enc})$

$3D\ Tensor: B * U * F$

Decoder Embeddings $h_u^{dec}$

Encoder Embeddings $h_t^{enc}$

$3D\ Tensor: B * T * F$

Decoder

Encoder

$U_{max}=20$
$B=3$

Decoder Training Batch  y

| 1 | 15 tokens | ///////// |
| 2 | 8 tokens | /////////////////////// |
| 3 | 20 tokens | |

Encoder Training Batch  x

| 1 | 60 frames | ///////// |
| 2 | 40 frames | ///////////////////////// |
| 3 | 120 frames | |

$T_{max}=120$
$B=3$

*Fig. 4A*
*(Prior Art)*

EP 4 618 073 A2

## Modified Training
## (forward pass)

$$4D\ Tensor: B * N * T * U$$
$$= (3) * (2) * (120) * (20)$$
$$= 14,400$$

New Joint Output

| Next Blank | Next Token |

$P(blank|t,u)$  $P(|y_{u+1}|t,u)$

Memory Storage (New)

| Next Blank | Next Token |

Memory Storage (old-see Fig. 2)

$h_{t,u}$

$z_{t,u}$

v.

New Joint Network

$3D\ Tensor: B * U * F$

Decoder Embeddings $h_u^{dec}$

Encoder Embeddings $h_t^{enc}$

$3D\ Tensor: B * T * F$

Decoder

Encoder

$U_{max}=20$
$B=3$

Decoder Training Batch  y

| 1 | 15 tokens | /////////// |
| 2 | 8 tokens | //////////////////////// |
| 3 | 20 tokens | |

Encoder Training Batch  x

| 1 | 60 frames | /////////// |
| 2 | 40 frames | ////////////////////////// |
| 3 | 120 frames | |

$T_{max}=120$
$B=3$

*Fig. 4B*

EP 4 618 073 A2

**Can now increase the batch size**

New Joint Output

Next Blank $\quad$ Next Token

$P(blank|t,u) \qquad P(|y_{u+1}|t,u)$

$4D\ Tensor{:}\ B * N * T * U$
$= (6) * (2) * (120) * (20)$
$= 28{,}800\ (new) \ll 28{,}800{,}000\ (old)$

New Joint Network

$3D\ Tensor{:}\ B * U * F$

Decoder Embeddings $\ \mathrm{h}_u^{dec}$

$3D\ Tensor{:}\ B * T * F$

Encoder Embeddings $\ \mathrm{h}_t^{enc}$

Decoder

Encoder

$U_{max}{=}20$
$B{=}6$

Decoder Training Batch $\ y$

| 1 | 15 tokens | ///////// |
| 2 | 8 tokens | /////////////////////// |
| 3 | 20 tokens | |
| 4 | 15 tokens | ///////// |
| 5 | 8 tokens | /////////////////////// |
| 6 | 20 tokens | |

...

$T_{max}{=}120$
$B{=}6$

Encoder Training Batch $\quad x$

| 1 | 60 frames | ///////// |
| 2 | 40 frames | /////////////////////// |
| 3 | 120 frames | |
| 4 | 60 frames | ///////// |
| 5 | 40 frames | /////////////////////// |
| 6 | 120 frames | |

...

*Fig. 4C*

**Modified Training
(forward pass)**

New Joint Output

| Next Blank | Next Token |

$P(blank|t,u)$  $P(|y_{u+1}|t,u)$

New Joint Network
(Joint + Linear + softmax)

Expand [M, Token Dim] to [B,T,U, Token Dim]

| Sliced Chunk | | |
| Sliced Chunk | X | Fused Linear + LogSoftmax |
| ⋮ | | |
| Sliced Chunk | | |

1) Generate z matrix
2) Divide z matrix into small slices (z-slice)
3) Compute fused linear + softmax for each z-slice to get $h$-slice outputs
4) Discard all outputs except the next blank and next token outputs

Compact [B,T,U, Dim] to [M, Dim]

[B,T,U,Dim]

4D matrix Activation

4D matrix Enc ∗ Dec

$3D\ Tensor: B * U * F$

Decoder Embeddings $h_u^{dec}$

$3D\ Tensor: B * T * F$

Encoder Embeddings $h_t^{enc}$

| Decoder | | Encoder |

| Decoder Training Batch  y | | Encoder Training Batch    x |

*Fig. 5*

EP 4 618 073 A2

**Modified Neural Transducer**

**Modified Neural Transducer**
**(after training)**

Modified Joint Network

Decoder

Encoder

**Modified Neural Transducer**
**(during training)**

New Joint Output → Loss

Modified Joint Network

Decoder

Encoder

*Recalculate h in slices*

*Memory for*
*backpropagation = (B \* T \* U)*

backpropagation

*Fig. 6*

EP 4 618 073 A2

700

OBTAINING A NEURAL TRANSDUCER COMPRISING AN ENCODER, A DECODER, AND A FUSED JOINT NETWORK, WHEREIN THE FUSED JOINT NETWORK HAS BEEN MODIFIED TO COMPRISE A FUSED LINEAR AND SOFTMAX LAYER — 710

PROVIDING AN ENCODER TRAINING BATCH TO THE ENCODER AND A DECODER TRAINING BATCH TO THE DECODER — 720

OBTAINING ENCODING EMBEDDINGS AND DECODING EMBEDDINGS FROM THE ENCODER AND DECODER — 730

PROVIDING THE ENCODING EMBEDDINGS AND DECODING EMBEDDINGS TO THE FUSED JOINT NETWORK — 740

CONFIGURING THE FUSED JOINT NETWORK TO OUTPUT A NEXT BLANK OUTPUT AND A NEXT TOKEN OUTPUT — 750

COMPUTING A LOSS FOR THE NEURAL TRANSDUCER — 760

BACKPROPAGATING THE LOSS THROUGH THE NEURAL TRANSDUCER TO UPDATE THE PARAMETERS OF THE NEURAL TRANSDUCER TO MINIMIZE THE LOSS — 770

GENERATING A MODIFIED NEURAL TRANSDUCER — 780

*Fig. 7*

EP 4 618 073 A2

**Reducing z (context)**

Output Probability Distribution $P(k|t,u)$

softmax Layer $\quad P(k|t,u) = softmax(\mathrm{h}_{t,u})$

Memory Storage

$4D\ Tensor: B * T * U * K$
$= (3) * (120) * (20) * (4000)$
$= 28{,}800{,}800$

Transformed Embeddings $\mathrm{h}_{t,u}$

$\mathrm{h}_{t,u}$

Linear Layer $\quad \mathrm{h}_{t,u} = \mathrm{W_y z_{t,u}} + \mathrm{b_y}$

$4D\ Tensor: B * T * U * D$

Joint Embeddings $\mathrm{z}_{t,u}$

$\mathrm{z}_{t,u}$

Joint Network $\quad \mathrm{z}_{t,u} = \mathrm{f^{joint}(h_t^{dec}, h_u^{enc})}$

800

Decoder Embeddings $\mathrm{h_u^{dec}}$

Encoder Embeddings $\mathrm{h_t^{enc}}$

$3D\ Tensor: B * U * F$

$3D\ Tensor: B * T * F$

Decoder

Encoder

$U_{max}$=20

$B$=3

| Decoder Training Batch y | |
|---|---|
| 1 | 15 tokens | ///////// |
| 2 | 8 tokens | ///////////////////////// |
| 3 | 20 tokens | |

| Encoder Training Batch x | |
|---|---|
| 1 | 60 frames | ///////// |
| 2 | 40 frames | ///////////////////////////// |
| 3 | 120 frames | |

$T_{max}$=120

$B$=3

**Fig. 8A**
**(Prior Art)**

Conventional Method for Computing $z_{t,u}$

$$z_{t,u} = f^{joint} (h_t^{dec}, h_u^{enc})$$

Conventional z Memory Requirement

$$B * T * U * D$$

vs.

Modified Method for Computing $z_{t,u}$

$$z_{slice} = f^{joint} (h_t^{slice}, h_u^{slice})$$

New z Memory Requirement

$$< slice\ size > * D << B * T * U * D$$

*Fig. 8B*

900

OBTAINING A NEURAL TRANSDUCER COMPRISING AN ENCODER, A DECODER, AND A FUSED JOINT NETWORK — 910

PROVIDING AN ENCODER TRAINING BATCH TO THE ENCODER AND A DECODER TRAINING BATCH TO THE DECODER — 920

OBTAINING ENCODING EMBEDDINGS AND DECODING EMBEDDINGS FROM THE ENCODER AND DECODER — 930

DIVIDING THE COMPUTATION OF JOINT EMBEDDINGS INTO SLICES — 940

COMPUTING A LOSS FOR THE NEURAL TRANSDUCER BASED ON THE JOINT EMBEDDINGS — 950

RECALCULATING THE JOINT EMBEDDINGS BY DIVIDING THE COMPUTATION OF JOINT EMBEDDINGS INTO SLICES DURING BACKPROPAGATION — 960

BACKPROPAGATING THE LOSS THROUGH THE NEURAL TRANSDUCER TO UPDATE THE PARAMETERS OF THE NEURAL TRANSDUCER TO MINIMIZE THE LOSS — 970

GENERATING A MODIFIED NEURAL TRANSDUCER — 980

*Fig. 9*

EP 4 618 073 A2

Memory Storage Requirement for Loss
Calculation with Conventional RNN-T
(See Fig. 2)

$h_{t,u}$

$z_{t,u}$

vs.

Memory Storage Requirement for Loss
Calculation with Modified RNN-T

Next Token

Next Blank

*Fig. 10A*

New Joint Output

Modified Joint Network

Slice

Slice      *      fused
                  linear
Slice             +
                  softmax

Decoder          Encoder

Memory

Slice

Slice

Slice

Threshold

EP 4 618 073 A2

*Fig. 10B*

During training, storing slices of transformed embeddings — 1110

Dynamically modifying at least one of a training data batch size and/or (b) a quantity or size of slices of transformed embeddings to be stored, the dynamic modification being based on a memory storage maximum capacity and/or a predetermined threshold of memory storage of a computing system performing the method — 1120

Computing a loss for the neural transducer — 1130

Backpropagating the loss through the neural transducer to update the parameters of the neural transducer to minimize the loss — 1140

Generating a modified neural transducer — 1150

*Fig. 11*

Encoding Storage Requirements For Utterances without Padding

Decoder Training Batch $y$

1 15 tokens
2 8 tokens
3 20 tokens

Encoder Training Batch $x$

1 60 frames
2 40 frames
3 120 frames

$=(15)(60) + (8)(40) + (20)(120) = 3620$

Encoding Storage Requirements For Utterances with Padding

Decoder Training Batch $y$

1 15 tokens
2 8 tokens
3 20 tokens

Encoder Training Batch $x$

1 60 frames
2 40 frames
3 120 frames

$=(3)(20)(120) = 7200$

Fig. 12

| | |
|---|---|
| OBTAINING A TRAINING BATCH OF UTTERANCES | 1310 |
| REMOVING PADDING USED FOR ONE OR MORE UTTERANCES OF THE TRAINING BATCH | 1320 |
| GENERATING JOINT EMBEDDINGS AND CORRESPONDING TRANSFORMED EMBEDDINGS OF THE UTTERANCES | 1330 |
| COMPUTING A LOSS FOR THE NEURAL TRANSDUCER BASED ON THE TRANSFORMED EMBEDDINGS | 1340 |
| BACKPROPAGATING THE LOSS THROUGH THE NEURAL TRANSDUCER TO UPDATE THE PARAMETERS OF THE NEURAL TRANSDUCER TO MINIMIZE THE LOSS | 1350 |
| GENERATING A MODIFIED NEURAL TRANSDUCER | 1360 |

*Fig. 13*

## Client System(s)
### 1420

Processor(s)  I/O device(s)

User Interface(s)

Hardware Storage Device(s)

Computer-Executable Instructions

## 1400

Network Connections 1440

## Server Computing System 1410

Hardware Processor(s)

I/O device(s)  User Interface(s)

Hardware Storage Device(s)

Computer-Executable Instructions  Audio Data

RNN-T Model  Training Data

## Third-Party System(s)
### 1430

*Fig. 14*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63566055

- US 74150624